# EUROPEAN PATENT SPECIFICATION

(11) **EP 4 588 864 B1**
(45) Date of publication and mention of the grant of the patent: **09.12.2026**
(21) Application number: 23865522.9
(22) Date of filing: 12.09.2023
(51) Int. Cl.: B65G 47/28, B65G 47/32, B65G 47/82, B65G 47/90

(54) **DOUGH PIECE ARRANGEMENT METHOD**
TEIGSTÜCKANORDNUNGSVERFAHREN
PROCÉDÉ D'AGENCEMENT DE PÂTONS

(30) Priority: 14.09.2022 JP 2022146145
(43) Date of publication of application: 23.07.2025
(73) Proprietor: Rheon Automatic Machinery Co., Ltd., Utsunomiya-shi, Tochigi 320-0071 (JP)
(72) Inventor: HARADA, Nobuaki, Utsunomiya-shi, Tochigi 320-0071 (JP); KOIKE, Ryohei, Utsunomiya-shi, Tochigi 320-0071 (JP)
(74) Representative: Huebner, Stefan Rolf
(86) International application number: PCT/JP2023/033193
(87) International publication number: WO 2024/058170

(56) References cited:
- CN-U- 205 431 796
- JP-A- 2015 146 781
- JP-A- 2016 086 797
- JP-A- H0 881 030
- US-A- 5 142 956
- US-A- 5 899 316
- US-A- 6 158 315
- US-A1- 2011 036 245
- US-A1- 2012 097 500
- US-A1- 2015 223 474
- US-A1- 2018 116 229

## Description

### TECHNICAL FIELD

The invention relates to an arrangement method for a food dough piece, such as a bread dough piece, and specifically to a method of arranging each of a plurality of dough pieces, which are adjacent to each other in a conveying direction on a first belt conveyor, onto a second belt conveyor disposed downstream of the first belt conveyor in a 90-degree rotated state.

### BACKGROUND ART

A method is known in which each of a plurality of dough pieces disposed adjacent to each other in a conveying direction on a first belt conveyor is rotated by 90 degrees and arranged on a second belt conveyor located downstream of the first belt conveyor by using a holding unit (e.g., Patent Publications 1 and 2). Also US 2015/223474 A1, US 2012/097500 A1 and CN 205431796 U disclose methods according to the prior art.

### PRIOR ART

### PATENT PUBLICATION

Patent Publication 1: Japanese Patent Laid-open Publication No. 2015-146781
Patent Publication 2: Japanese Patent Laid-open Publication No. 2018-074998

### SUMMARY OF THE INVENTION

### PROBLEM TO BE SOLVED BY THE INVENTION

Although each of the dough pieces on the first belt conveyor is held in the same position by the holding unit, the position of the dough pieces arranged on the second belt conveyor may not be stable in a width direction perpendicular to the conveying direction. This is because, for example, due to time changes in characteristics (softness) of the dough piece, the dough piece is deformed, or a position of the dough pieces is shifted relative to the holding unit.

For example, when a position of a triangular croissant dough piece disposed on the second belt conveyor is shifted in the width direction, the dough piece could not be centered in a rolling or bending device disposed on a downstream side so that a shape of the shaped dough piece would be asymmetrical or unstable.

Therefore, an object of the present invention is to provide a method to stabilize a position of the dough piece in the width direction, which dough piece is rotated by 90 degrees and arranged on the second belt conveyor by the holding unit.

### MEANS FOR SOLVING THE PROBLEM

In order to achieve the above-stated object, the method according to the present invention is a method for arranging a plurality of dough pieces disposed adjacent to each other in a conveying direction on a first belt conveyor onto a second belt conveyor disposed downstream of the first belt conveyor with rotating the dough pieces by 90 degrees; comprising steps of:
(a) detecting a position of one dough piece moving in the conveying direction relative to the first belt conveyor by an upstream sensor;
(b) moving a holding unit for holding the one dough piece in the conveying direction so that when the one dough piece reaches a predetermined position relative to the first belt conveyor, an alignment location of the holding unit reaches a holding location of the one dough piece;
(c) holding the one dough piece with the holding unit by lowering the holding unit while the holding unit is moved in the conveying direction at the same speed as a speed of the one dough piece, and then, moving the holding unit downstream at a speed faster than the speed of the first belt conveyor;
(d) after rotating the one dough piece by 90 degrees in a predetermined rotational direction, raising the holding unit to release the one dough piece;
(e) detecting a center position of the one dough piece in a width direction perpendicular to the conveying direction, the one dough piece having been released onto the second belt conveyor;
(f) when the center position of the one dough piece is shifted relative to a predetermined reference position in the width direction, and a side of shifting the center position is a return side relative to the predetermined rotational direction on the downstream side of the one dough piece, shifting the holding location of the one dough piece on the first belt conveyor toward the upstream side; and
(g) when the center position of the one dough piece is shifted relative to the predetermined reference position in the width direction, and a side of shifting the center position is a progressive side relative to the predetermined rotational direction on the downstream side of the one dough piece, shifting the holding location of the one dough piece on the first belt conveyor toward the downstream side.

In the above-stated steps (f) and (g), the position of the dough piece arranged onto the second belt conveyor can be stabilized in the width direction by putting the center position of the one dough piece closer to the reference position.

In the present invention, preferably, after the step (d) is performed, the released one dough piece is aligned by an alignment shutter, and then, the step (e) is performed.

In the present invention, preferably in the step (b), moving the holding unit is controlled according to signals of an encoder which generates pulses by the movement of the first belt conveyor.

In the present invention, preferably, the plurality of dough pieces disposed adjacent to each other in the conveying direction on the first belt conveyor includes one downstream dough piece and one upstream dough piece; and the steps (a)-(c) are performed for the one downstream dough piece, the steps (a)-(c) are then performed for the upstream dough piece, the step (d) is then performed simultaneously for the one downstream dough piece and the one upstream dough piece; and the steps (e)-(g) are then performed for the one downstream dough piece.

### BRIEF DESCRIPTION OF THE DRAWINGS

Fig. 1 is a schematic plan view of a portion of an apparatus according to the present invention.
Fig. 2 is a schematic left-side view of the apparatus according to the present invention.
Fig. 3 is a schematic front view of the apparatus according to the present invention.
Fig. 4 is a schematic plan view of the apparatus according to the present invention.
Fig. 5 is a schematic front view of a portion of the apparatus according to the present invention.
Fig. 6 is a schematic plan view of a portion of the apparatus according to the present invention.
Fig. 7 is a schematic left-side view of the apparatus according to the present invention.
Fig. 8a is a schematic illustration of a basic operation of a method according to the present invention.
Fig. 8b is a schematic illustration of the basic operation of the method according to the present invention.
Fig. 8c is a schematic illustration of the basic operation of the method according to the present invention.
Fig. 9a is a schematic illustration of the method according to the present invention.
Fig. 9b is a schematic illustration of the method according to the present invention.
Fig. 9c is a schematic illustration of the method according to the present invention.
Fig. 9d is a schematic illustration of the method according to the present invention.
Fig. 10a is a schematic illustration of the method according to the present invention.
Fig. 10b is a schematic illustration of the method according to the present invention.
Fig. 10c is a schematic illustration of the method according to the present invention.
Fig. 10d is a schematic illustration of the method according to the present invention.
Fig. 11 is a right-side view of an alignment shutter.
Fig. 12 is a cross-sectional plan view of the alignment shutter.
Fig. 13 is a front view of the alignment shutter.
Fig. 14a is a schematic illustration of an operation of the alignment shutter.
Fig. 14b is a schematic illustration of the operation of the alignment shutter.
Fig. 14c is a schematic illustration of the operation of the alignment shutter.
Fig. 14d is a schematic illustration of the operation of the alignment shutter.

### DESCRIPTION OF EMBODIMENTS

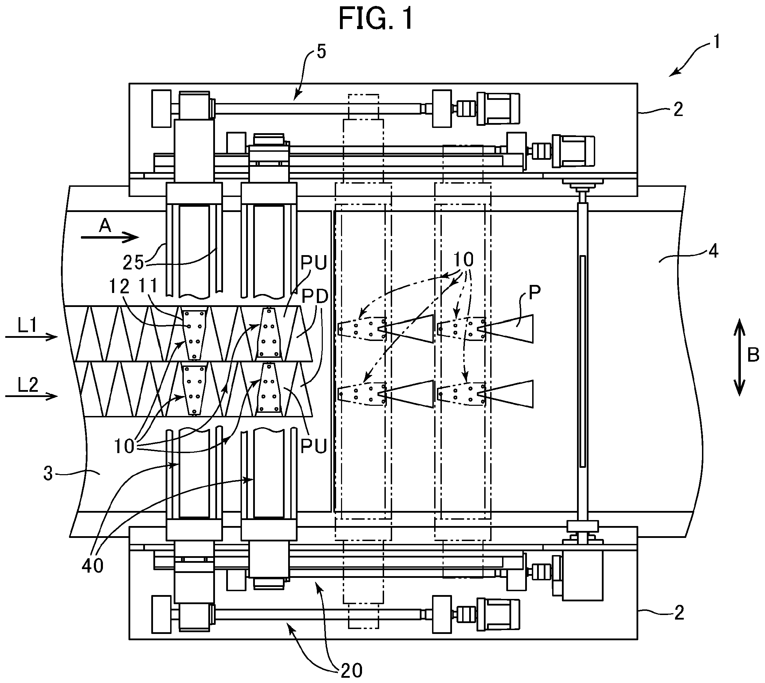

Referring to Figs. 1-7, an example of an arrangement system used for a method according to the present invention will be generally explained. In Figs. 1-7, a conveying direction (backward and forward direction) in which a dough piece P is conveyed from an upstream (backward) side to a downstream (forward) side is indicated as a symbol "A", a width direction (left-right direction) perpendicular to the conveying direction A is indicated as a symbol "B", and a vertical direction is indicated as a symbol "C".

As shown in Figs. 1-4, an arrangement system 1 includes a left and right frames 2, a first belt conveyor 3 conveying a plurality of dough pieces P disposed adjacent to each other in the conveying direction A, a second belt conveyor 4 disposed downstream of the first belt conveyor 3, and an arrangement device 5 which rotates the dough piece P on the first belt conveyor 3 by 90 degrees and arranges the dough piece P onto the second belt conveyor 4, wherein the arrangement device 5 includes a holding unit 10 for holding one dough piece P.

In this embodiment, the dough pieces P, which are disposed adjacent to each other in the conveying direction A, are also disposed in two lines adjacent to each other in the width direction B. A shape of the dough piece P is a substantially elongated triangle. The plurality of dough pieces P in the one line is disposed so that vertices of the triangles are located on left and right sides alternately.

In this embodiment, the arrangement device 5 is configured to arrange the two dough pieces P (a downstream piece PD and an upstream piece PU) adjacent to each other in the conveying direction A into two lines (a first line L1 on the left side and a second line L2 on the right side), consequently, to arrange four dough pieces P. A speed of the second belt conveyor 4 is set faster than a speed of the first belt conveyor 3.

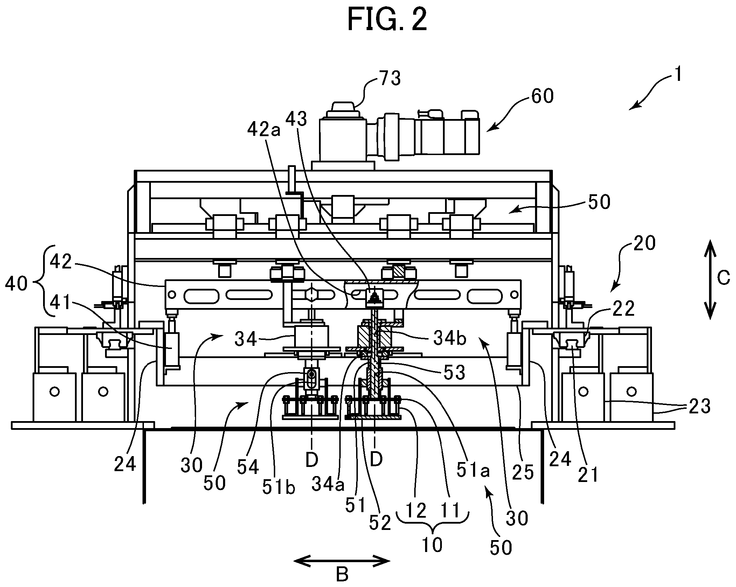

As shown in Figs. 1 and 2, the holding unit 10 includes a holding plate 11 disposed horizontally, and a plurality of holding pins 12 extending downward from the holding plate 11. As described later, the holding unit 10 is movable vertically, and is configured to hold the dough piece P by pressing the dough piece P downward with the holding pins 12 when the holding unit 10 is lowered. The number and positions of the holding pins 12 may be determined so that the dough piece P is deformed as little as possible during the dough piece P is arranged. In this embodiment, seven holding pins 12 are attached to the holding plate 11.

As shown in Fig. 2, the arrangement device 5 includes a first moving device 20 for moving the holding unit 10 in the conveying direction A, a second moving device 30 for moving the holding unit 10 in the width direction B, a third moving device 40 for moving the holding unit 10 in the vertical direction C, and a fourth moving device 50 with a vertical axis D for rotating the holding unit 10 around the vertical axis D. The arrangement device 5 further includes a drive unit 60 for driving the second moving device 30.

In this embodiment, for the four dough pieces P, the arrangement device 5 includes the four holding units 10 (see Figs. 1, 2, and 5), the four second moving devices 30 (see Figs. 2, 4, and 5), and the four fourth moving devices 50 (see Figs. 2, 4, and 5). For the most downstream dough piece P (downstream dough piece PD) and the dough piece P adjacent to the most downstream dough piece P (upstream dough piece PU), the arrangement device 5 also includes the two first moving device 20 (see Fig. 1) and the two third moving device 40 (see Fig. 1).

As shown in Fig. 2, each of the two first moving device 20 includes left and right rails 21 which are attached to the frames 2 and extend in the conveying direction A, left and right sliders 22 moving along the rails 21, left and right linear motors 23 for moving the left and right sliders 22 in the conveying direction A, respectively, left and right brackets 24 attached to the sliders 22, and two (front and rear) span plates 25 which are attached between the left and right brackets 24 and extend in the width direction B. The left and right rails 21 are commonly used for the two first moving device 20. This structure is configured to allow the span plates 25 to be moved in the conveying direction A.

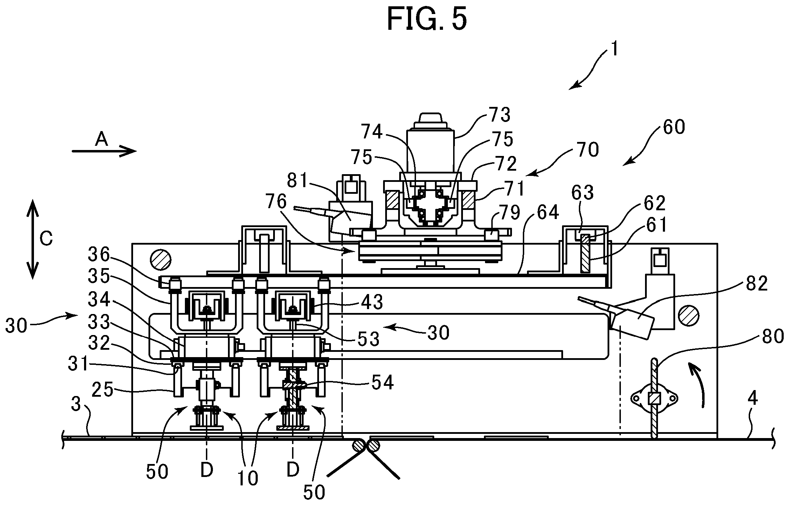

As shown in Fig. 5, each of the four second moving devices 30 includes front and rear rails 31 which are attached to the front and rear span plates 25 and extend in the width direction B, front and rear sliders 32 moving along the rails 31, a plate 33 attached onto the front and rear sliders 32, a rotary cylinder 34 disposed on the plate 33, a U-shaped bracket 35 extending upward from the rotary cylinder 34, and four (combination of front or back and left or right) cam followers 36 attached to tips of the U-shaped bracket 35. The rotary cylinder 34 includes a rotary portion 34a rotating around the vertical axis D, and a through hole 34b extending along the vertical axis. This structure is configured to allow the second moving device 30 itself to be moved along the span plates 25 in the width direction B.

As shown in Fig. 2, each of the two third moving device 40 includes left and right cylinders 41 which are attached to the left and right brackets 24, respectively, and is extendable in the vertical direction C, a U-shaped span 42 extending between the left and right cylinders 41, and two U-shaped brackets 43 attached to the span 42 to be allowed to slide in the width direction B. The span 42 includes elongated apertures 42a extending in the width direction B, while the bracket 43 includes a pin sliding in the elongated apertures 42a. This structure is configured to allow the U-shaped brackets 43 to move in the vertical direction C relative to the span plates 25.

As shown in Fig. 2, each of the four fourth moving devices 50 includes a tube guide 51 attached to the rotary portion 34a of the rotary cylinder 34, and a plate 52 attached to the tube guide 51. The tube guide 51 includes a through hole 51a with a circular cross section extending in the vertical direction, and elongated apertures 51b extending in the vertical direction C. Further, each of the fourth moving devices 50 includes a shaft 53 fitted in the through aperture 51a so that the shaft 53 is allowed to slide in the vertical direction C, and a pin 54 extending from the shaft 53 into the elongated apertures 51b of the tube guide 51. The shaft 53 extends upward through the through aperture 34b of the rotary cylinder 34 and is attached to the U-shaped bracket 43 so that the shaft 53 is allowed to be rotated around the vertical axis D. Further, the holding unit 10 is attached to a lower end of the shaft 53. The plate 52 is located below the holding plate 11 and includes apertures through which the holding pins 12 pass when the holding plate 11 is lowered.

This structure allows the holding unit 10 to be rotated around the vertical axis D by the rotary cylinder 34 via the elongated apertures 51b of the tube guide 51 and the pin 54 of the shaft 53. Further, the holding unit 10 is allowed to be moved in the vertical direction C by the cylinder 41 via the shaft 53, the U-shaped bracket 43 (third moving device 40) and the U-shaped span 42. Further, the holding unit 10 is allowed to be moved in the conveying direction A by the linear motor 23 via the span plates 25.

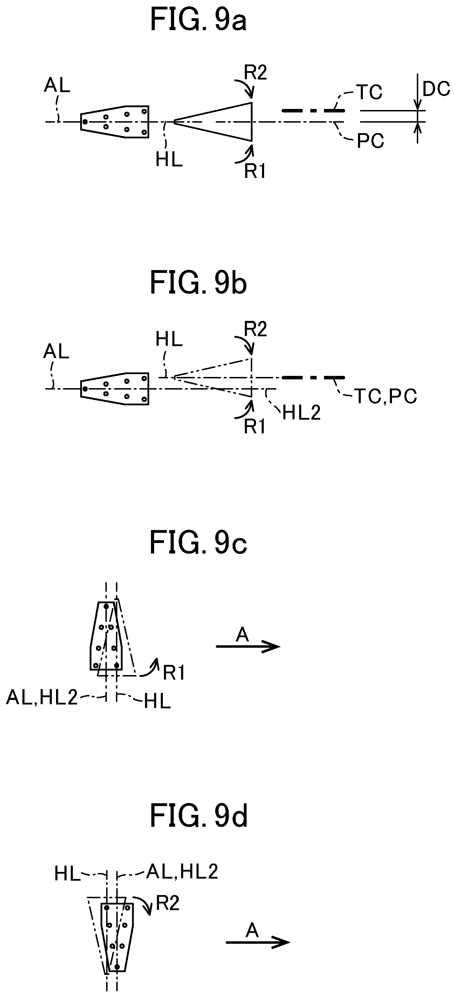

In this embodiment, the rotary cylinder 34 is configured to rotate by 90 degrees. In a plan view, the fourth moving devices 50 for the downstream dough pieces PD are configured to rotate the holding units 10 counterclockwise R1, while the fourth moving devices 50 for the upstream dough pieces PU are configured to rotate the holding unit 10 clockwise R2 (see Fig. 9).

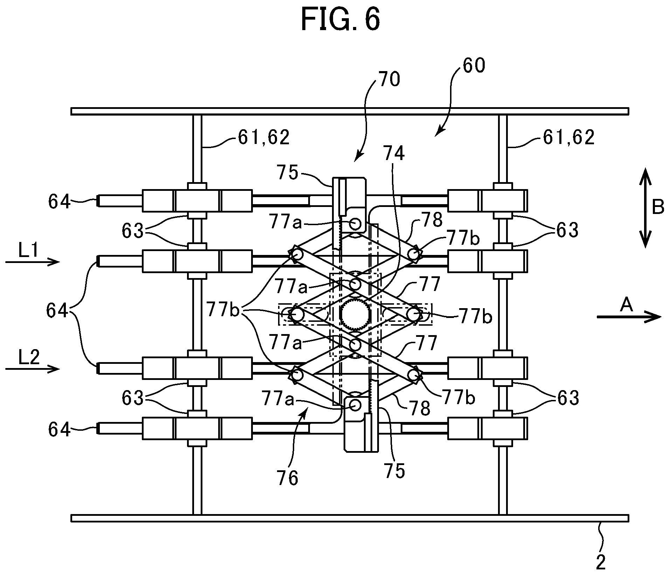

As shown in Figs. 5 and 6, the drive unit 60 is configured to be applied to four lines, and includes two (front and rear) span plates 61 which are attached between the left and right frames 2 and extend in the width direction B, two (front and rear) rails 62 which are attached to the span plates 61 and extend in the width direction B, eight sliders 63 moving along the rails 62, and four drive bars 64 which are attached to the sliders 63 via brackets and extend in the conveying direction A. Two of the drive bars 64 are used for the first and second lines L1, L2. The four cam followers 36 of the second moving device 30 are disposed on the opposite sides of the drive bars 64 and allowed to slide in the conveying direction A. This structure allows the drive bar 64 to be moved in the width direction B, and the second moving device 30 is configured to be moved in the width direction B by moving the drive bar 64 in the width direction B.

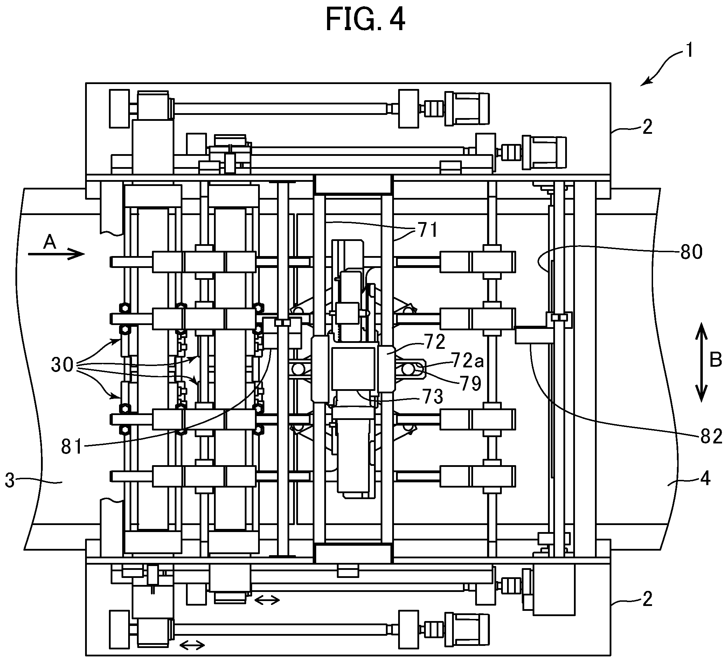

The drive unit 60 further includes a pantograph unit 70. As shown in Figs. 4 and 5, the pantograph unit 70 includes two spans 71 extending in the width direction B, a support block 72 which is slidably attached to and vertically sandwich the spans 71, a motor 73 attached to the support block 72, a rotatable pinion 74 attached to the motor 73, two racks 75 which are threadably engaged to the pinion 74 and extend in the width direction B, and a pantograph mechanism 76. As shown in Fig. 6, the pantograph mechanism 76 includes two X-shaped links 77 adjacent to each other, and two V-shaped links 78 disposed at the opposite ends of the X-shaped links 77 in the width direction B. Each of the links 77, 78 is pivotably attached at its intersection 77a. The four intersections 77a are disposed on a straight line extending in the width direction B. Ends of the adjacent links 77, 78 are pivotably attached at connecting points 77b. The three connecting points 77b are located upstream of the intersections 77a, while the three other connecting points 77b are located downstream of the intersections 77a. The four intersections 77a are pivotably connected to the respective drive bars 64. Each of the two racks 75 is cantilevered from the drive bar 64 to which the V-shaped link 78 is attached. Each of the two central ends includes a cam follower 79 extending upward. The support block 72 can be secured at an appropriate position of the span 71 in the width direction B, and includes elongated apertures 72a for receiving the cam followers 79 to allow the cam follower 79 to be slid in the conveying direction A. Thus, the pantograph unit 70 is configured to operate the pantograph mechanism 76 by rotating the pinion 74 by the motor 73 so that the drive bars 64 are expanded and contracted in the width direction B at equal distances.

This structure allows the holding unit 10 to be moved in the width direction B by the motor 73 via the second moving device 30, the drive bars 64, and the pantograph mechanism 76.

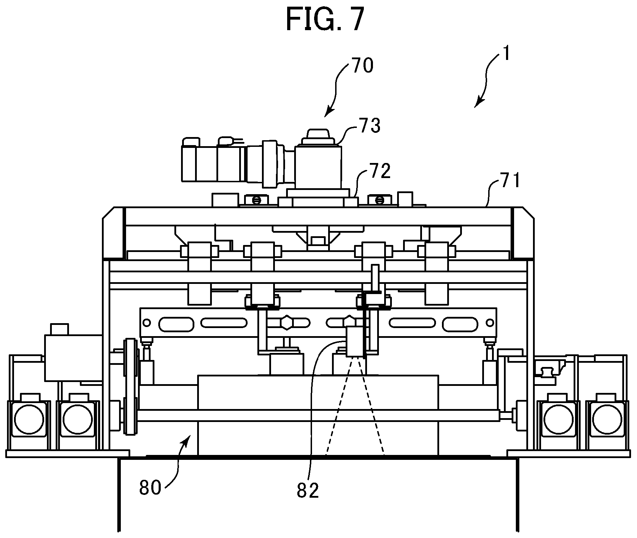

As shown in Figs. 5 and 7, the arrangement device 5 further includes a rotaryplate type alignment shutter 80. This allows downstream sides of the dough pieces P to be aligned in the width direction.

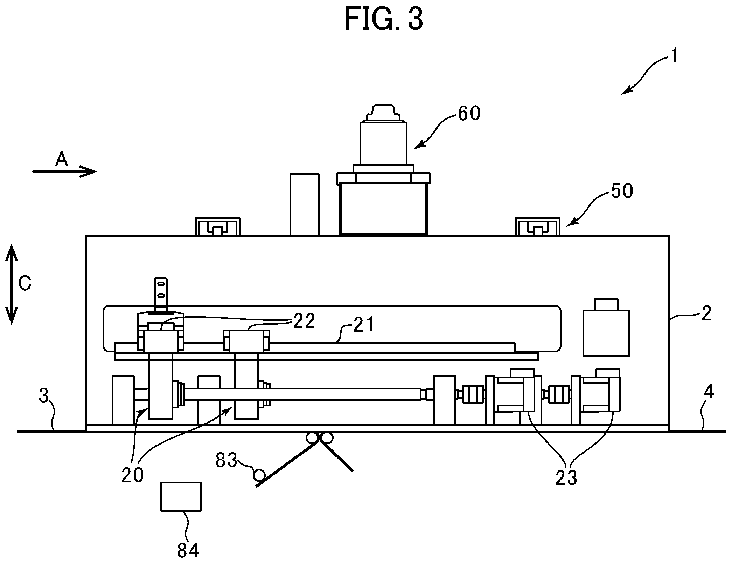

As shown in Figs. 3 and 5, the arrangement system 1 further includes an upstream sensor 81 positioned above the first belt conveyor 3, a downstream sensor 82 positioned above the second belt conveyor 4, an encoder 83 causing signals according to moving action of the first belt conveyor 3, and a controller 84 connected to the sensors 81, 82 and the encoder 83. The controller 84 is connected to the linear motors 23 of the first moving devices 20, the rotary cylinders 34 of the second moving devices 30, the cylinders 41 of the third moving devices 40, and the motor 73 of the drive unit 60 to control them. In particular, the controller 84 can control a position and a moving speed of the holding unit 10 in the conveying direction A by controlling the linear motors 23.

The downstream sensor 82 is preferably defined by a kind in which multiple detecting elements are linearly arranged so that a length and a position of the dough piece P in the width direction B at the detection location can be detected. The upstream sensor 81 may be a kind in which at least two portions of the dough piece P in the width direction B can be detected so that an orientation of a triangular dough piece P is automatically determined.

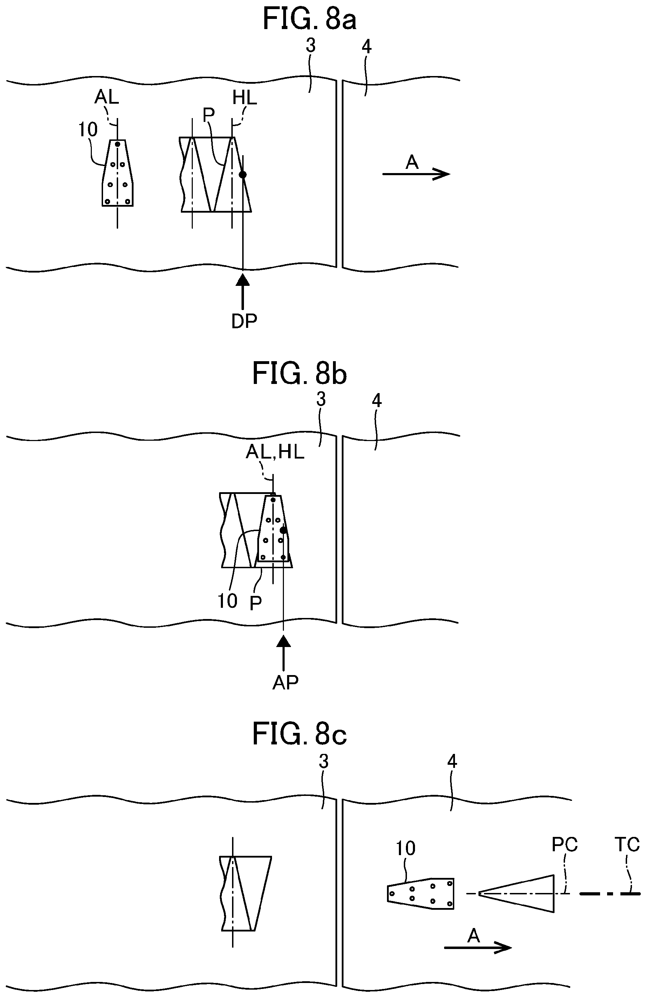

Next, referring to Figs. 8a-10d, an operation of the above-stated arrangement system 1 applied to one line of the dough pieces will be explained.

Firstly, referring to Figs. 8a- 8c, a basic operation will be explained. The holding unit 10 defines a predetermined alignment location AL (e.g., a center location) in the conveying direction A, and is stopped at an initial position in the conveying direction A. The most downstream dough piece P (PD) defines a predetermined holding location HL (e.g., a center location) in the conveying direction A.

The dough piece P is detected by the upstream sensor 81 at a predetermined position DP in the conveying direction A of the first belt conveyor 3 (see Fig. 8a; Operation (a)). After that, the controller 84 is allowed to determine the position of the dough piece P based on signals of the encoder 83.

Next, the controller 84 controls the linear motors 23 to move the holding unit 10 in the conveying direction A so that the alignment location AL of the holding unit 10 reaches the holding location HL of the dough piece P when the dough piece P reaches a predetermined position AP in the conveying direction A of the first belt conveyor 3 (see Fig. 8b; Operation (b)). In this Operation (b), the movement of the holding unit 10 is preferably controlled according to the signals of the encoder 83, which generates pulses according to the movement of the first belt conveyor 3. For example, a moving start timing and a moving speed of the holding unit 10 are determined according to the signals of the encoder 83. Alternatively, a time period from the detection by the sensor to the moving start timing may be determined by a timer. However, if such a timer is employed, when a production volume or a kind of product is changed, settings of the timer and the speed should be changed so that burden on an operator is increased. Thus, the control according to the signals of the encoder 83, which does not require such changes, is preferable.

Next, the holding unit 10 is lowered while the holding unit 10 is moved in the conveying direction A at the same speed as the speed of the dough piece P to hold the dough piece P, and then moved toward the downstream side at a speed faster than the speed of the first belt conveyor 3 (Operation (c)).

In case of multiple lines, the holding unit 10 is moved in the width direction B by a predetermined distance by the second moving device 30 and the drive unit 60 so that a distance between the adjacent dough pieces P in the width direction B is enlarged.

Next, the dough piece P is rotated in a predetermined rotational direction (counterclockwise) R1 by 90 degrees, and after that, the holding unit 10 is raised above the second belt conveyor 4 to release the dough piece P (see Fig. 8c; Operation (d)). Thus, the center position PC of the dough piece P in the width direction B should correspond to a predetermined reference position TC. After the Operation (d), the released dough piece P is preferably aligned by the alignment shutter 80.

Next, the positions in the rotational and width directions of the holding unit 10 are returned so that the holding unit 10 is returned to the initial position.

Next, referring to Figs. 9a- 10d, an example of a method according to the present invention, which is performed when the center position PC of the dough piece P does not correspond to the reference position TC, will be explained.

After the Operation (d) (preferably, after the released dough piece P is aligned by the alignment shutter 80), the center position PC of the dough piece P in the width direction B is detected by the downstream sensor 82 (Operation (e)). The controller 84 determines to which side and how far the center position PC is shifted relative to the reference position TC.

When the side to which the center position PC is shifted relative to the reference position TC is a return side (downward side in Fig. 9a) of the dough piece P in the predetermined rotational direction (counterclockwise) R1 on the downstream side of the dough piece P, the holding location HL of the dough piece P is shifted to an upstream location HL2 (see Fig. 9b, Operation (f)) because it is desired that the dough piece P to be moved next is put closer to a two-dotted line shown in Fig. 9b. An amount of shifting the holding location HL is arbitrary, and for example, the amount may be a shifted amount DC between the center position PC and the reference position TC or a half of the shifted amount DC.

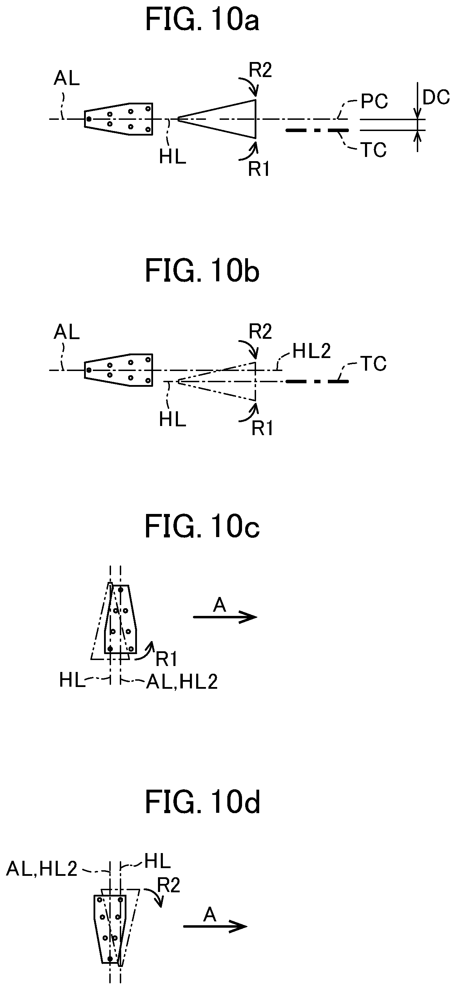

When the side to which the center position PC is shifted relative to the reference position TC is a progressive side (upward side in Fig. 10a) of the dough piece P in the predetermined rotational direction (counterclockwise) R1 on the downstream side of the dough piece P, the holding location PL of the dough piece P is shifted to a downstream location HL2 (see Fig. 10c, Operation (g)) because it is desired that the dough piece P to be moved next is put closer to a two-dotted line shown in Fig. 10b. An amount of shifting the holding location HL is arbitrary, and for example, the amount may be the shifted amount DC between the center position PC and the reference position TC or a half of the shifted amount DC.

When the shifted amount DC is large, if the amount of shifting the holding location HL is determined as the shifted amount DC, the dough piece P to be moved next might be shifted to the opposite side relative to the reference position TC. Thus, repeating an operation that the amount of shifting the holding location HL is determined as the half of the shifted amount DC is preferable to put the center position PC gradually closer to the reference position TC.

Next, an example of a method according to the present invention, which is applied to the two adjacent dough pieces P in the conveying direction A (downstream dough piece PD and upstream dough piece PU) will be explained.

For the downstream dough piece PD, the Operations (a)-(c) are performed. Then, for the upstream dough piece PU, the Operations (a)-(c) are performed. Then, for the downstream and upstream dough pieces PD, PU, the Operation (d) is performed simultaneously. In the case of the triangular dough piece P, the rotational directions of the downstream dough piece PD and the upstream dough piece PU are opposite to each other. Then, for the downstream dough piece PD, the Operations (e)-(g) are performed.

Operations when the predetermined rotational direction of the dough piece P is clockwise are similar to the operations when the predetermined rotational direction of the dough piece P is counterclockwise. In the Operation (f), when the side to which the center position PC is shifted relative to the reference position TC is a return side (upward side in Fig. 10a) of the dough piece P in the predetermined rotational direction (clockwise) R2 on the downstream side of the dough piece P, the holding location HL of the dough piece P is shifted to an upstream location HL2 (see Fig. 10d) because it is desired that the dough piece P to be moved next is put closer to the two-dotted line shown in Fig. 10b. An amount of shifting the holding location HL is arbitrary, and for example, the amount may be the shifted amount DC between the center position PC and the reference position TC or a half of the shifted amount DC.

When the side to which the center position PC is shifted relative to the reference position TC is a progressive side (downward side in Fig. 9a) of the dough piece P in the predetermined rotational direction (clockwise) R2 on the downstream side of the dough piece P, the holding location HL of the dough piece P is shifted to a downstream location HL2 (see Fig. 9d) because it is desired that the dough piece P to be moved next is put closer to the two-dotted line shown in Fig. 9b. An amount of shifting the holding location HL is arbitrary, and for example, the amount may be the shifted amount DC between the center position PC and the reference position TC or a half of the shifted among DC.

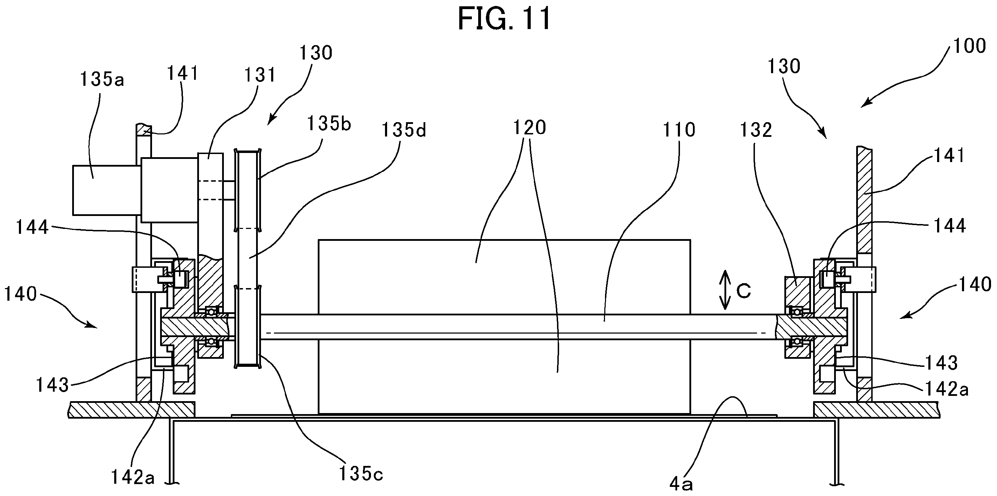

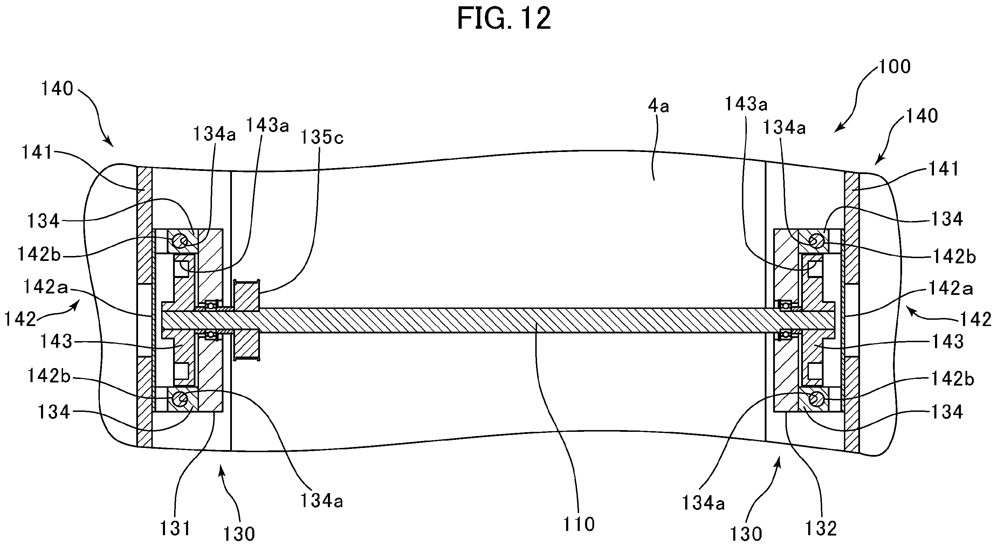

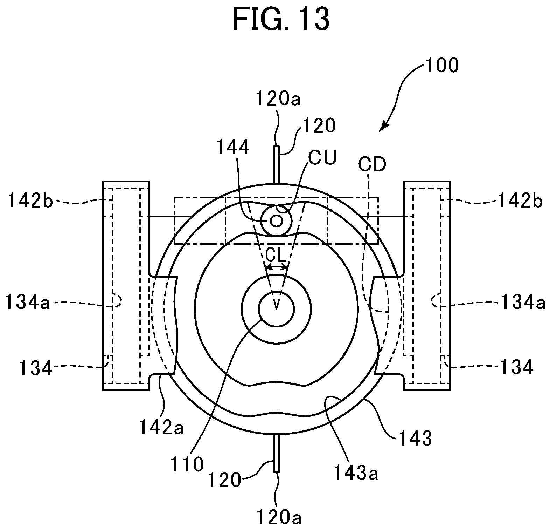

Next, referring to Figs. 11-13, a preferable alignment shutter 100 will be explained. The alignment shutter 100 includes a rotary shaft 110, two rotary plates 120 which extend radially outward from the rotary shaft 110 and are thin plates, a support section 130 for rotatably supporting the rotary shaft 110, and a moving section 140 which moves the rotary shaft 110 in the vertical direction C.

The rotary plates 120 extend in opposite directions from each other, i.e., are apart from each other by 180 degrees in a rotational direction E.

The support section 130 includes a first support plate 131 which rotatably supports one end of the rotary shaft 110, and a second support plate 132 which rotatably supports the opposite end of the rotary shaft 110. Each of the first and second support plates 131, 132 includes a sliding portion 134 which allows the support plate 131, 132 to be linearly moved in the vertical direction C together with the rotary shaft 110. For rotating the rotary shaft 110, the support section 130 further includes a motor 135a secured to the first support plate 131, a drive pulley 135b attached to the motor 135a, a driven pulley 135c secured to one end of the rotary shaft 110, and a drive belt 135d wound around the drive pulley 135b and the driven pulley 135c.

The moving section 140 includes a pair of frames 141, a pair of sliding supports 142 which slidably supports the sliding portion 134 relative to the frames 141, a pair of cam discs 143 secured to opposite ends of the rotary shaft 110, and a pair of cam followers 144 secured to the frames 141. In this embodiment, the sliding support 142 includes a bracket 142a secured to the frame 141, and two shafts 142b each of which extends in the vertical direction C and has a circular cross section, wherein the shaft 142b includes the opposite ends secured to the bracket 142a. The sliding portion 134 of the support plates 131, 132 protrudes beyond the shafts 142b and includes a circular aperture 134a which slidably fits to the shafts 142b. The cam disc 143 includes a cam groove 143a for guiding the cam follower 144. The cam groove 143a is annularly defined around the rotary shaft 110. The cam follower 144 is disposed above the rotary shaft 110. Thus, the cam followers 144 support the rotary shaft 110 via the cam discs 143.

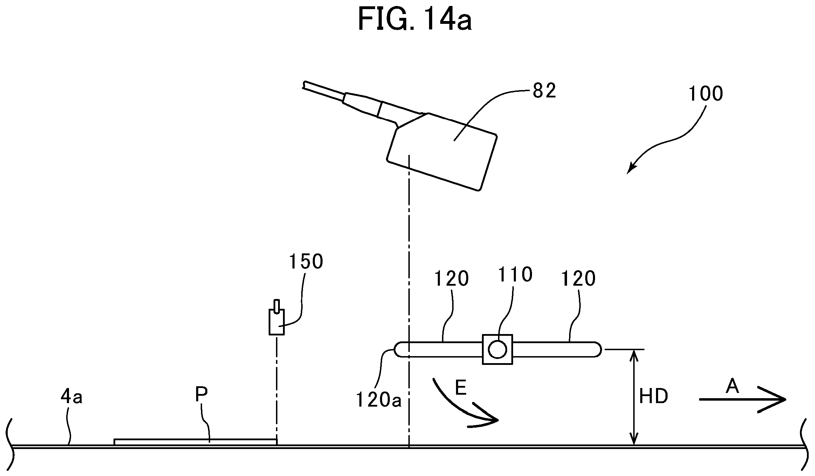

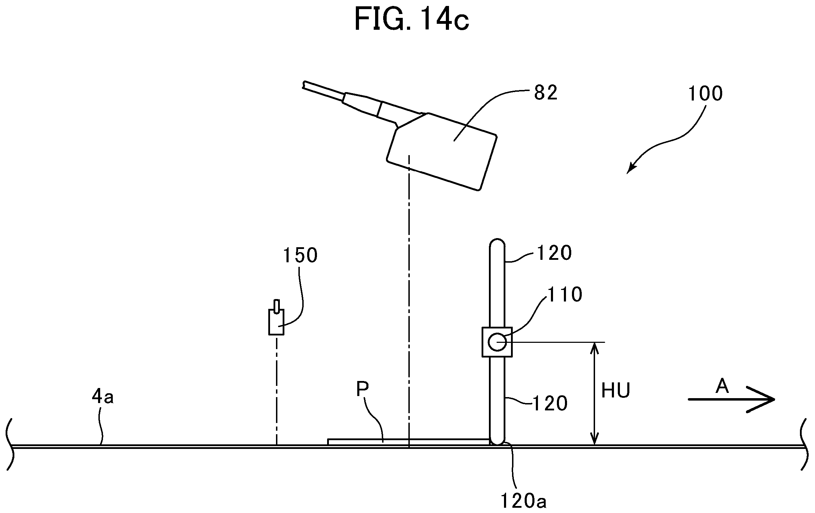

The cam discs 143 are configured to be vertically moved relative to the frames 141 according to a distance from the rotary shaft 110 to the cam groove 143a. In this embodiment, when the rotary plate 120 is in the lowest position, a raised position HU of the rotary shaft 110 (see Fig. 14c) is defined by a position CU of the cam groove 143a so that a tip 120a of the rotary plate 120 is close to the conveyor belt 4a of the second belt conveyor 4. Thus, the travels of the dough pieces P are interrupted by the rotary plate so that the plurality of dough pieces P can be aligned in the width direction B. When the rotary plate 120 is in a horizontal position, a position CD of the cam groove 143a is defined so that the lowered position HD of the rotary shaft 110 (see Fig. 14a) is lower than the raised position HU. The cam groove 143a defines an arc at the position CD. Further, the cam groove 143a is curved in a range CL while the rotary plate 120 rotates within a predetermined range including the lowest position so that a radius of the cam roove 143a from the rotary shaft 110 becomes smaller toward the position CU to maintain a state in which the tip 120a is close to the conveyor belt 4a, (to maintain a gap between the tip 120a and the conveyor belt 4a approximately the same). In this way, the alignment shutter 100 is configured so that the rotation and the movement in the vertical direction C of the rotary shaft 110 are synchronized. Further, the alignment shutter 100 is configured so that the rotation and the movement in the vertical direction C of the rotary shaft 110 are performed by the one motor 135a. At this time, the rotary shaft 110, the rotary plates 120, the first support plate 131, the second support plate 132, and the motor 135a are configured to be integrally moved in the vertical direction C.

The alignment shutter 100 also includes a sensor 150 for rotational control of the alignment shutter 100. A rotating speed and a rotating start timing of the motor 135a is arbitrarily set.

Next, referring to Figs. 14a- 14d, an operation of the alignment shutter 100 will be explained.

Fig. 14a shows the alignment shutter 100 in which the rotary plate 120 stands by in the horizontal position. The rotary shaft 110 is located in the lowered position HD. When the sensor 150 detects the dough piece P, the rotation of the rotary shaft 110 is started. The rotating speed of the rotary shaft 110 is set as a constant speed so that a speed of the tip 120a of the rotary plate 120 in the conveying direction A is slightly lower than the speed of the conveyor belt 4a. The rotating start timing of the rotary shaft 110 is preferably determined so that until the rotary plate 120 reach the lowest position, the dough pieces P in all rows reach the rotary plate 120 and each of the dough pieces P is aligned.

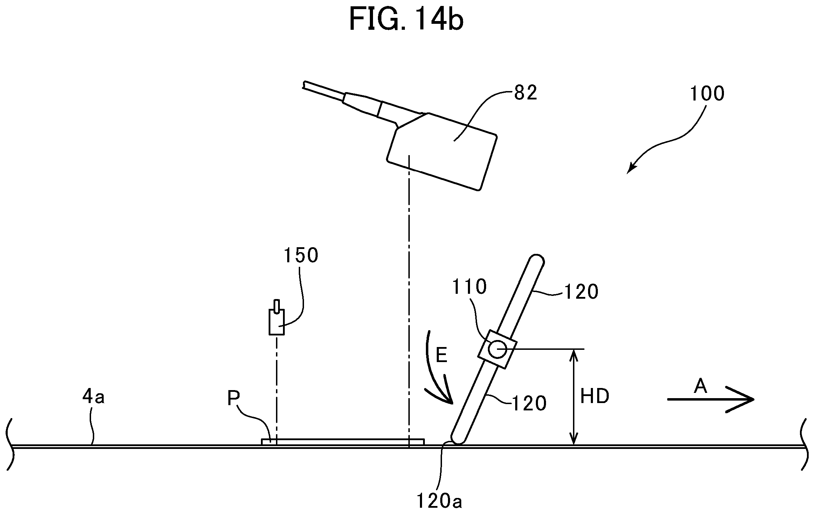

After the tip 120a of the rotary plate 120 is put close to the conveyor belt 4a (see Fig. 14b), the rotary shaft 110 is raised by the cam groove 143a so that the gap between the tip 120a of the rotary plate 120 and the conveyor belt 4a is maintained. The speed of the tip 120a of the rotary plate 120 in the conveying direction A is slightly lower than the speed of the conveyor belt 4a and is kept constant.

When the rotary plate 120 reaches the lowest position, the rotation of the rotary shaft 110 is stopped so that the dough pieces P are aligned in the width direction B (see Fig. 14c). The rotary shaft 110 is located in the raised position HU. At this time, a center position of the dough piece P in the width direction B perpendicular to the conveying direction A is detected by the sensor 82 (Operation (e)).

If the dough pieces P reach the rotary plate 120 and are aligned before the rotary plate 120 reaches the lower position, an impact on the dough piece P when the dough piece is aligned would be less than that when the rotary plate 120 is stopped, because the tip 120a of the rotary plate 120 is moving in the conveying direction A. Thus, the shift of the dough piece P relative to the rotary plate 120 can be reduced. Namely, the center position of the dough piece P in the width direction can be accurately detected by the sensor 82.

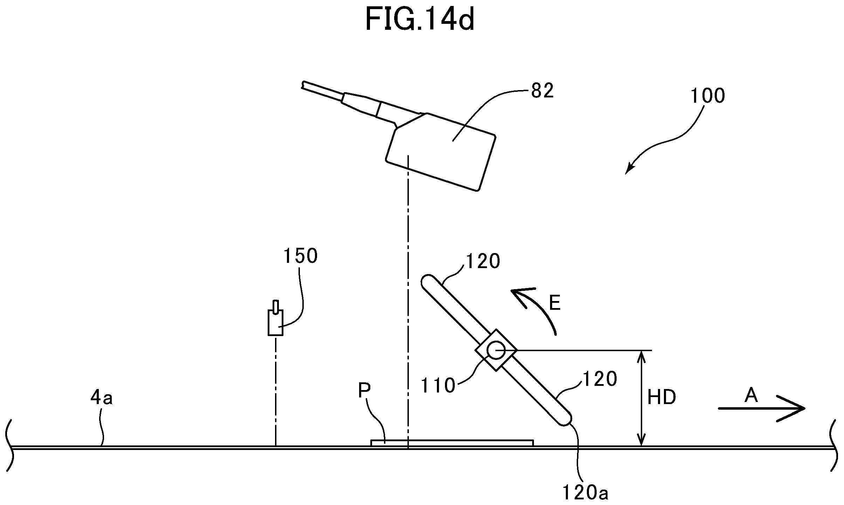

After a predetermined time period has passed after the rotation of the rotary shaft 110 is stopped, the rotation of the rotary shaft 110 is restarted. The rotary shaft 110 is lowered by the cam groove 143a so that the gap between the tip 120a of the rotary plate 120 and the conveyor belt 4a is maintained. After that, the tip 120a is moved away from the conveyor belt 4a (see Fig. 14d). The rotating speed of the rotary shaft 110 is determined so that the speed of the tip 120a of the rotary plate 120 in the conveying direction A is faster than the speed of the conveyor belt 4a. Thus, the rotary plate 120 is pulled away from the dough piece P, and the dough piece P is released from the rotary plate 120. The rotary plate 120 is stopped in the horizontal position.

Although the arranging method according to the embodiment of the present invention is generally explained above, it goes without saying that various modifications are possible.

The structure of the arrangement device 5 is not limited to that of the above embodiment or is arbitrary, and for example, may be the configuration described in the Patent Publications 1 or 2. The structure of the holding unit 10 is not limited to that of the above embodiment including the holding pins 12 or is arbitrary, and for example, may be a suction-type structure.

The number of the lines of dough pieces P disposed adjacent to each other in the conveying direction A is not limited to two in the above-explained embodiment or is arbitrary, and may be one or more than two. Further, the shape of the dough pieces is not limited to be substantially triangular in the above-explained embodiment or is arbitrary, and for example, may be rectangular.

The alignment shutter 80 is not limited to the structure of the above-explained embodiment or is arbitrary, and may be omitted if it is not required.

Instead of the rotary cylinder 34, a rotary motor may be used. The angles of movement of the rotary motor may be 90 degrees clockwise and counterclockwise, or 180 degrees clockwise and counterclockwise. In the latter case, clockwise or counterclockwise movement may be automatically selected by detecting the orientation of the dough piece P.

In the above-stated embodiment, the shifted amount DC between the center position PC of the dough piece P and the reference position TC is used to determine the amount of shifting the holding location HL of the dough piece P to be moved next, but for example, an average value of the multiple shifted amounts DC may be used, or a value derived from a trend of the shifted amounts DC may be used.

In the above-stated embodiment, the rotation and the movement in the vertical direction C of the rotary shaft 110 are performed by the one motor 135a, but may be performed by synchronized separate motors.

3: first belt conveyor
4: second belt conveyor
4a: conveyor belt
10: holding unit
80, 100: alignment shutter
83: encoder
110: rotary shaft
120: rotary plate
120a: tip
A: conveying direction
B: width direction
AL: alignment location of the holding unit
AP: position where the alignment location of the holding unit matches the holding location of the dough piece
DP: detecting position of the dough piece by upstream sensor
HL: holding location of the dough piece before rotation
P: dough piece
PC: center position of the dough piece in the width direction after rotation
TC: reference position
R1: counterclockwise
R2: clockwise

## Claims

1. A method for arranging a plurality of dough pieces (P) disposed adjacent to each other in a conveying direction (A) on a first belt conveyor (3) onto a second belt conveyor (4) disposed downstream of the first belt conveyor (3) with rotating the dough pieces (P) by 90 degrees; comprising steps of:
(a) detecting a position (DP) of one dough piece (P) moving in the conveying direction (A) relative to the first belt conveyor (3) by an upstream sensor (81);
(b) moving a holding unit (10) for holding the one dough piece (P) in the conveying direction (A) so that when the one dough piece (P) reaches a predetermined position (AP) relative to the first belt conveyor (3), an alignment location (AL) of the holding unit (10) reaches a holding location (HL) of the one dough piece (P);
(c) holding the one dough piece (P) with the holding unit (10) by lowering the holding unit (10) while the holding unit (10) is moved in the conveying direction (A) at the same speed as a speed of the one dough piece (P), and then, moving the holding unit (10) downstream at a speed faster than the speed of the first belt conveyor (3);
(d) after rotating the one dough piece (P) by 90 degrees in a predetermined rotational direction (R1, R2), raising the holding unit (10) to release the one dough piece (P);
(e) detecting a center position (PC) of the one dough piece (P) in a width direction (B) perpendicular to the conveying direction (A), the one dough piece (P) having been released onto the second belt conveyor (4);
(f) when the center position (PC) of the one dough piece (P) is shifted relative to a predetermined reference position (TC) in the width direction, and a side of shifting the center position (PC) is a return side relative to the predetermined rotational direction (R1, R2) on the downstream side of the one dough piece (P), shifting the holding location (HL) of the one dough piece (P) on the first belt conveyor (3) toward the upstream side; and
(g) when the center position (PC) of the one dough piece (P) is shifted relative to the predetermined reference position (TC) in the width direction, and a side of shifting the center position (PC) is a progressive side relative to the predetermined rotational direction (R1, R2) on the downstream side of the one dough piece (P), shifting the holding location (HL) of the one dough piece (P) on the first belt conveyor (3) toward the downstream side.

2. The method according to claim 1, wherein after the step (d) is performed, the released one dough piece (P) is aligned by an alignment shutter (80, 100), and then, the step (e) is performed.

3. The method according to claim 2,
wherein the alignment shutter (100) includes a rotary shaft (110), and a rotary plate (120) attached to the rotary shaft (110), and
further comprising steps of:
raising the rotary shaft (110) while rotating the rotary shaft (110) so that a tip (120a) of the rotary plate (120) is close to the conveyor belt (4a) of the second belt conveyor (4) and is moved in the conveying direction (A) at a speed slower than a speed of the conveyor belt (4a); and
aligning the one dough piece (P) by the rotary plate (120) while moving the tip (120a) of the rotary plate (120) in the conveying direction (A).

4. The method according to claim 1,
wherein in the step (b), moving the holding unit (10) is controlled according to signals of an encoder (83) which generates pulses by the movement of the first belt conveyor (3).

5. The method according to claim 1,
wherein the plurality of dough pieces (P) disposed adjacent to each other in the conveying direction (A) on the first belt conveyor (3) includes one downstream dough piece (P) and one upstream dough piece (P), and
wherein the steps (a)-(c) are performed for the one downstream dough piece (P), the steps (a)-(c) are then performed for the one upstream dough piece (P), the step (d) is then performed simultaneously for the one downstream dough piece (P) and the one upstream dough piece (P), and the steps (e)-(g) are then performed for the one downstream dough piece (P).

## Patentansprüche

1. Verfahren zum Anordnen einer Mehrzahl von Teigstücken (P), die auf einem ersten Bandförderer (3) in einer Förderrichtung (A) nebeneinander angeordnet sind, auf einem zweiten Bandförderer (4), der stromabwärts des ersten Bandförderers (3) angeordnet ist, unter Drehung der Teigstücke (P) um 90 Grad, umfassend die Schritte:
(a) Erfassen einer Position (DP) eines sich in der Förderrichtung (A) bewegenden Teigstücks (P) relativ zu dem ersten Bandförderer (3) mittels eines stromaufwärts angeordneten Sensors (81);
(b) Bewegen einer Halteeinheit (10) zum Halten des einen Teigstücks (P) in der Förderrichtung (A), so dass, wenn das eine Teigstück (P) eine vorbestimmte Position (AP) relativ zu dem ersten Bandförderer (3) erreicht, eine Ausrichtposition (AL) der Halteeinheit (10) eine Halteposition (HL) des einen Teigstücks (P) erreicht;
(c) Halten des einen Teigstücks (P) mit der Halteeinheit (10) durch Absenken der Halteeinheit (10), während die Halteeinheit (10) in der Förderrichtung (A) mit derselben Geschwindigkeit wie das eine Teigstück (P) bewegt wird, und anschließendes Bewegen der Halteeinheit (10) stromabwärts mit einer Geschwindigkeit, die höher als die Geschwindigkeit des ersten Bandförderers (3) ist;
(d) nach dem Drehen des einen Teigstücks (P) um 90 Grad in einer vorbestimmten Drehrichtung (R1, R2), Anheben der Halteeinheit (10), um das eine Teigstück (P) freizugeben;
(e) Erfassen einer Mittelposition (PC) des einen Teigstücks (P) in einer Breitenrichtung (B), die senkrecht zu der Förderrichtung (A) verläuft, wobei das eine Teigstück (P) auf den zweiten Bandförderer (4) freigegeben worden ist;
(f) wenn die Mittelposition (PC) des einen Teigstücks (P) relativ zu einer vorbestimmten Referenzposition (TC) in der Breitenrichtung versetzt ist und eine Seite, zu der die Mittelposition (PC) versetzt ist, auf der stromabwärtigen Seite des einen Teigstücks (P) relativ zu der vorbestimmten Drehrichtung (R1, R2) eine Rücklaufseite ist, Versetzen der Halteposition (HL) des einen Teigstücks (P) auf dem ersten Bandförderer (3) zu der stromaufwärtigen Seite hin; und
(g) wenn die Mittelposition (PC) des einen Teigstücks (P) relativ zu der vorbestimmten Referenzposition (TC) in der Breitenrichtung versetzt ist und eine Seite, zu der die Mittelposition (PC) versetzt ist, auf der stromabwärtigen Seite des einen Teigstücks (P) relativ zu der vorbestimmten Drehrichtung (R1, R2) eine Vorlaufseite ist, Versetzen der Halteposition (HL) des einen Teigstücks (P) auf dem ersten Bandförderer (3) zu der stromabwärtigen Seite hin.

2. Verfahren nach Anspruch 1,
wobei nach Durchführung des Schritts (d) das freigegebene eine Teigstück (P) durch einen Ausrichtschieber (80, 100) ausgerichtet wird und anschließend Schritt (e) durchgeführt wird.

3. Verfahren nach Anspruch 2,
wobei der Ausrichtschieber (100) eine Drehwelle (110) und eine an der Drehwelle (110) angebrachte Drehplatte (120) umfasst, und
ferner umfassend die Schritte:
Anheben der Drehwelle (110) unter gleichzeitigem Drehen der Drehwelle (110), so dass sich eine Spitze (120a) der Drehplatte (120) nahe dem Förderband (4a) des zweiten Bandförderers (4) befindet und in der Förderrichtung (A) mit einer Geschwindigkeit bewegt wird, die niedriger als die Geschwindigkeit des Förderbands (4a) ist; und
Ausrichten des einen Teigstücks (P) mittels der Drehplatte (120), während die Spitze (120a) der Drehplatte (120) in der Förderrichtung (A) bewegt wird.

4. Verfahren nach Anspruch 1,
wobei in Schritt (b) das Bewegen der Halteeinheit (10) gemäß Signalen eines Encoders (83) gesteuert wird, der durch die Bewegung des ersten Bandförderers (3) Impulse erzeugt.

5. Verfahren nach Anspruch 1,
wobei die Mehrzahl von Teigstücken (P), die auf dem ersten Bandförderer (3) in der Förderrichtung (A) nebeneinander angeordnet sind, ein stromabwärtiges Teigstück (P) und ein stromaufwärtiges Teigstück (P) umfasst, und
wobei die Schritte (a) bis (c) für das eine stromabwärtige Teigstück (P) durchgeführt werden, anschließend die Schritte (a) bis (c) für das eine stromaufwärtige Teigstück (P) durchgeführt werden, anschließend Schritt (d) gleichzeitig für das eine stromabwärtige Teigstück (P) und das eine stromaufwärtige Teigstück (P) durchgeführt wird und anschließend die Schritte (e) bis (g) für das eine stromabwärtige Teigstück (P) durchgeführt werden.

## Revendications

1. Procédé pour disposer une pluralité de pâtons (P), disposés les uns à côté des autres dans une direction de transport (A) sur un premier convoyeur à bande (3), sur un second convoyeur à bande (4) disposé en aval du premier convoyeur à bande (3), tout en faisant tourner les pâtons (P) de 90 degrés, comprenant les étapes consistant à :
(a) détecter, au moyen d'un capteur amont (81), une position (DP) d'un pâton (P) se déplaçant dans la direction de transport (A) par rapport au premier convoyeur à bande (3) ;
(b) déplacer une unité de maintien (10), destinée à maintenir ledit pâton (P), dans la direction de transport (A), de telle sorte que, lorsque ledit pâton (P) atteint une position prédéterminée (AP) par rapport au premier convoyeur à bande (3), une position d'alignement (AL) de l'unité de maintien (10) atteigne une position de maintien (HL) dudit pâton (P) ;
(c) maintenir ledit pâton (P) au moyen de l'unité de maintien (10) en abaissant l'unité de maintien (10) tandis que l'unité de maintien (10) est déplacée dans la direction de transport (A) à la même vitesse que ledit pâton (P), puis déplacer l'unité de maintien (10) vers l'aval à une vitesse supérieure à la vitesse du premier convoyeur à bande (3) ;
(d) après avoir fait tourner ledit pâton (P) de 90 degrés dans une direction de rotation prédéterminée (R1, R2), relever l'unité de maintien (10) afin de libérer ledit pâton (P) ;
(e) détecter une position centrale (PC) dudit pâton (P) dans une direction de largeur (B) perpendiculaire à la direction de transport (A), ledit pâton (P) ayant été libéré sur le second convoyeur à bande (4) ;
(f) lorsque la position centrale (PC) dudit pâton (P) est décalée par rapport à une position de référence prédéterminée (TC) dans la direction de largeur, et qu'un côté vers lequel la position centrale (PC) est décalée est, sur le côté aval dudit pâton (P), un côté de retour par rapport à la direction de rotation prédéterminée (R1, R2), décaler la position de maintien (HL) dudit pâton (P) sur le premier convoyeur à bande (3) vers le côté amont ; et
(g) lorsque la position centrale (PC) dudit pâton (P) est décalée par rapport à la position de référence prédéterminée (TC) dans la direction de largeur, et qu'un côté vers lequel la position centrale (PC) est décalée est, sur le côté aval dudit pâton (P), un côté d'avance par rapport à la direction de rotation prédéterminée (R1, R2), décaler la position de maintien (HL) dudit pâton (P) sur le premier convoyeur à bande (3) vers le côté aval.

2. Procédé selon la revendication 1,
dans lequel, après l'exécution de l'étape (d), ledit pâton (P) libéré est aligné au moyen d'un volet d'alignement (80, 100), puis l'étape (e) est exécutée.

3. Procédé selon la revendication 2,
dans lequel le volet d'alignement (100) comprend un arbre rotatif (110) et une plaque rotative (120) fixée à l'arbre rotatif (110), et
comprenant en outre les étapes consistant à :
relever l'arbre rotatif (110) tout en faisant tourner l'arbre rotatif (110), de telle sorte qu'une extrémité (120a) de la plaque rotative (120) soit proche de la bande transporteuse (4a) du second convoyeur à bande (4) et soit déplacée dans la direction de transport (A) à une vitesse inférieure à la vitesse de la bande transporteuse (4a) ; et
aligner ledit pâton (P) au moyen de la plaque rotative (120) tout en déplaçant l'extrémité (120a) de la plaque rotative (120) dans la direction de transport (A).

4. Procédé selon la revendication 1,
dans lequel, à l'étape (b), le déplacement de l'unité de maintien (10) est commandé en fonction de signaux d'un codeur (83) qui génère des impulsions du fait du déplacement du premier convoyeur à bande (3).

5. Procédé selon la revendication 1,
dans lequel la pluralité de pâtons (P), disposés les uns à côté des autres dans la direction de transport (A) sur le premier convoyeur à bande (3), comprend un pâton aval (P) et un pâton amont (P), et
dans lequel les étapes (a) à (c) sont exécutées pour ledit pâton aval (P), les étapes (a) à (c) sont ensuite exécutées pour ledit pâton amont (P), l'étape (d) est ensuite exécutée simultanément pour ledit pâton aval (P) et ledit pâton amont (P), puis les étapes (e) à (g) sont exécutées pour ledit pâton aval (P).
